(19) Europäisches Patentamt
European Patent Office
Office européen des brevets

(11) **EP 1 734 737 B1**

(12) **EUROPEAN PATENT SPECIFICATION**

(45) Date of publication and mention
of the grant of the patent:
**28.03.2018 Bulletin 2018/13**

(51) Int Cl.:
*H04N 1/405* *(2006.01)*  *H04N 1/409* *(2006.01)*

(21) Application number: **06250357.8**

(22) Date of filing: **24.01.2006**

(54) **Image processing method and a recording medium storing image processing program**

Bildverarbeitungsverfahren und Speichermedium für die Lagerung eines Bildverarbeitungsprogramms

Méthode de traitement d'image et support d'enregistrement pour le stokage de programme de traitement d'image

(84) Designated Contracting States:
**DE FR GB**

(30) Priority: **17.06.2005 JP 2005177704**

(43) Date of publication of application:
**20.12.2006 Bulletin 2006/51**

(73) Proprietor: **Konica Minolta Business Technologies, Inc.**
**Tokyo 100-0005 (JP)**

(72) Inventor: **Washio, Koji**
**Hachioji-shi,**
**Tokyo 192-8505 (JP)**

(74) Representative: **Gille Hrabal**
**Postfach 18 04 09**
**40571 Düsseldorf (DE)**

(56) References cited:
**EP-A- 0 356 225    US-A- 4 084 259**
**US-A- 4 437 122    US-A- 6 038 348**
**US-B1- 6 236 466**

EP 1 734 737 B1

**Description**

This invention relates to an image processing method and a recording medium storing an image processing program and, more particularly, to an image processing method and a recording medium storing image processing program for properly processing contour portions of an object.

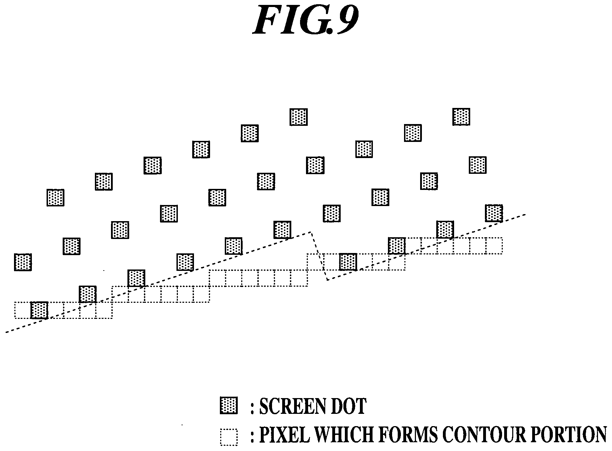

With printers and the like in which a regular or systematic screen pattern is used, dotting is performed every predetermined number of pixels (a spot formed by using such a screen pattern is referred to as a dot). When a dither process is performed in such a printer to represent a letter image in a halftone, a phenomenon which is called a jaggy and in which a contour portion (i.e., an outline portion) of the letter looks to be jagged may occur or part of the letter may be thinned, as shown in FIG. 9, because of the difference between the angle of a contour line of the letter image and a screen angle. If such degradation in image quality makes it difficult to identify a contour portion of the letter, the apparent resolution of the letter image lowers, resulting in lower visibility.

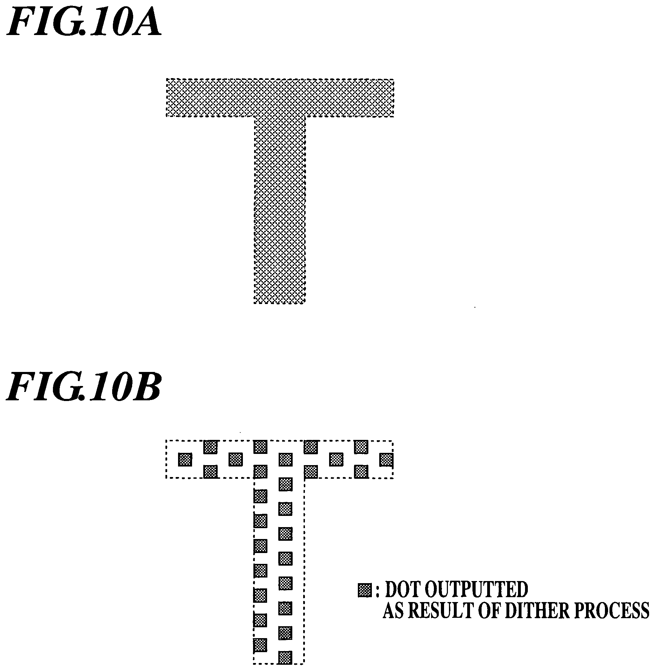

For example, if a dither process is performed on an image of the letter "T" shown in FIG. 10A to reproduce it with intermediate density, then an output result shown in FIG. 10B is obtained. In FIG. 10B, a dotted line indicates a contour line. As shown in FIG. 10B, in a horizontal line portion of "T" dots are outputted in some contour portions and are not outputted in others. As a result, a jaggy phenomenon has occurred. In addition, in a contour portion of a vertical line of "T" thinning has occurred, so the shape of the original letter cannot be reproduced accurately.

To solve these problems which arise in contour portions, a method for determining the characteristics (indicative of an image type such as a character, a graphic, or a photograph drawing) of each pixel from information described in a page description language (PDL) and for performing image processing according to the characteristics has conventionally been disclosed (see, for example, JP-Tokukai-Hei-9-282471A). According to the method disclosed in JP-Tokukai-Hei-9-282471A, a TEXT signal indicative of a letter is generated for a pixel in an image area including, for example, a letter for which importance is attached to resolution. At image processing time, a high-resolution screen, such as a 400-line single line screen, is used for the image area in which the TEXT signal is set, and a low-resolution screen, such as a 200-line single line screen, is used for the other areas. The screens which differ in resolution are used in this way for avoiding degradation in the resolution of a letter area.

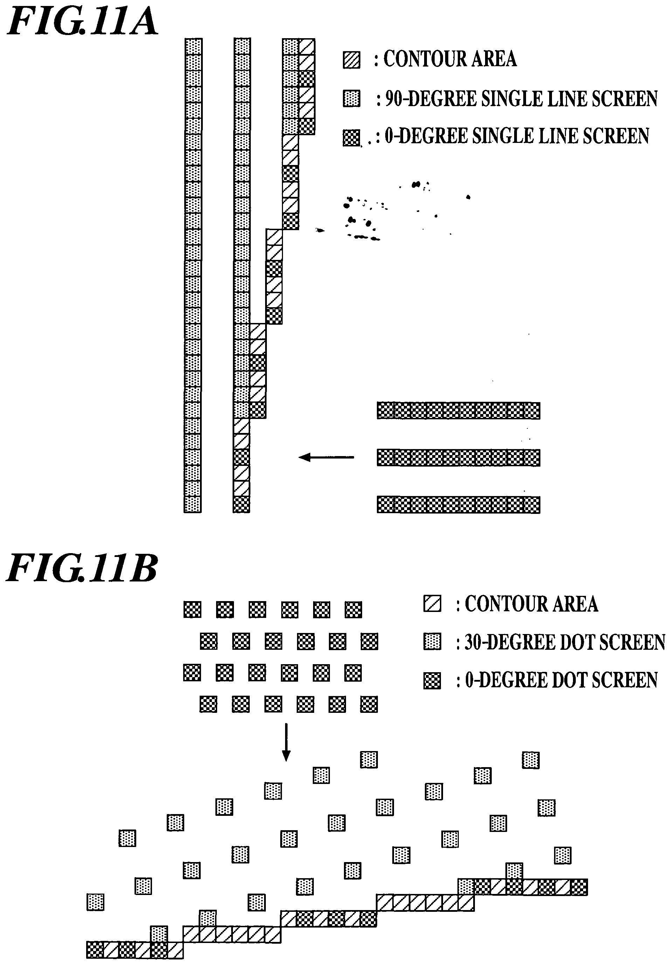

If the angle of a contour line approximates to a screen angle, intervals at which dots are outputted are long in a contour portion. As a result, a jaggy appears in a long cycle and is very noticeable. As shown in FIG. 11A, for example, such a problem arises in the case where a 90-degree single line screen is used for a contour line the angle of which approximates to 90 degrees. To solve this problem, it is effective to control the angle of the contour line not to approximate to the screen angle thus shorting the cycle of the jaggy. For example, a 0-degree single line screen is preferably used.

A technique for extracting contour portions included in an image on the basis of a PDL, for performing a dither process on a non-contour area by using a single line screen, and for performing, for example, a diffusion dither process which is a kind of dither process and in which no angle is required on a contour area or exercising control, by performing a dither process on a contour area by the use of a single line screen having a screen angle other than an ordinary screen angle according to the angle of a contour, so as to prevent the angle of the contour from approximating to the screen angle is disclosed as one of such methods (see, for example, JP-Tokukai-2004-40499A).

With some printers, however, at the stage of printing out density may differ according to the relative positions of two or more dots formed by ink or toner. For example, the total of the toner densities of two dots adjacent to each other may differ from the total of the toner densities of two dots distant from each other due to the frequency response characteristics of a printer. That is to say, when one dot is formed, the printer responds slowly and the amount of toner or the like outputted is small. On the other hand, when two dots are formed in succession, the printer responds quickly and the amount of the toner or the like outputted increases. However, output characteristics differ among different printers in degree.

With the technique disclosed in JP-Tokukai-2004-40499A, another dither process is performed on the contour portions. As a result, in some cases a phenomenon in which dots outputted in the contour portions by using the different screen patterns are locally touching or separate occurs periodically.

As can be seen from FIG. 11A, for example, if a dither process is performed on the non-contour area by using a 90-degree single line screen and a dither process is performed on the contour area by using a 0-degree single line screen, a phenomenon in which dots formed in a contour portion by using the different single line screens are locally touching or separate occurs at regular intervals.

When the above output characteristics of printers are taken into consideration, the density of a portion in which dots are touching becomes high. If the contour area is studded with high density portions at regular intervals or randomly, then a jaggy appears and image quality may be degraded. Intervals at which dots are touching are long when the screen angle of a single line screen used for performing a dither process on the non-contour area approximates to the angle of a contour portion. In this case, a jaggy is very noticeable.

A contone process may be performed on the contour area to add a contour line. However, the problem of the appearance of a jaggy as a result of a contour line and a dot being touching at regular intervals cannot be solved.

Moreover, such a technique can be applied only to cases where a single line screen is used, and cannot be applied to cases where a dot screen is used. Even if a dither process is performed on the contour area by using a dot screen the screen angle which differs from that of a dot screen used for performing a dither process on the non-contour area, the same problem that arises in the case of using a single line screen will turn up. That is to say, as shown in FIG. 11B, a phenomenon in which dots formed in a contour portion by using the different screens are locally touching or separate occurs at regular intervals.

EP 0,356,225 discloses using either a fixed threshold or a variable threshold for binarization depending upon whether or not a pixel is located in the vicinity of an edge portion of an image.

US-6,038,348 discloses a pixel image enhancement system which operates on color or monochrome source images to produce output cells the same size as the source pixels but not spatially coincident or one-to-one correspondent with them.

US-4,437,122 discloses an invention which enhances the resolution and quality of characters of a system receiving the information initially in the form of video display pixels and providing hard copy output. This is accomplished by storing at least three successive lines of video data in successive, parallel connected shift registers, applying the outputs of the shift registers to a decoder, and generating driving signals for the printer head.

An of the present invention is to enhance contour portions (i.e., outline portions) without degrading image quality.

To address the above aim, in accordance with an embodiment reflecting the first aspect of the present invention, there is provided an image processing method according to claim 1.

In accordance with an embodiment reflecting the second aspect of the invention, there is provided a recording medium according to claim 7.

In either of the embodiments reflecting the first and second aspects of the present invention, it is preferable that, in the discriminating, whether the target pixel is a contour pixel which constitutes a part of the contour of the object or not is discriminated based on the pixel value of the target pixel and a pixel value of a surrounding pixel for the target pixel.

Preferably, in the determining of either of the above mentioned embodiments, an output value is obtained by applying a threshold for a dither process corresponding to the target pixel and is determined as the output value of the target pixel, in the case of discriminating that the target pixel is not a contour pixel.

Preferably, in the determining of either of the above mentioned embodiments,
a plurality of output values are obtained by applying thresholds for a dither process corresponding to a plurality of pixels outside the object, and
an output value of the target pixel is determined by referring to an operation result obtained by a simple mean value, a weighted mean value or a maximum value of the plurality of output values, or combination thereof.

Preferably, either of the above mentioned embodiments further comprises inputting an image identification signal indicative of a type of the image including the target pixel,
wherein the determining is performed only on a target pixel for which the image identification signal is a specific signal.

Preferably, either of the above mentioned embodiments further comprises inputting the pixel value of the target pixel,
wherein the determining is performed only when the pixel value of the target pixel is greater than or equal to a certain value.

The present invention will become more fully understood from the detailed description given hereinbelow and the accompanying drawings which are given by way of illustration only, and thus are not intended as a definition of the limits of the present invention, and wherein:

FIG. 1 is a view showing the internal structure of an image processing apparatus according to an embodiment of the present invention;
FIG. 2 is a view showing an example of a screen cell used for performing a dither process;
FIG. 3 is a view showing a threshold function set for a cell element;
FIG. 4 is a view showing the relationships among threshold functions set for cell elements;
FIG. 5 is a flow chart for describing the flow of a process performed by a contour processing section;
FIG. 6 is a view showing an example of a template pattern;
FIGS. 7A, 7B, and 7C are views showing examples of output obtained by a contour enhancement process;
FIGS. 8A and 8B are views showing examples of output obtained by a contour enhancement process;
FIG. 9 is a view for describing a jaggy which appears as a result of a conventional dither process;
FIGS. 10A and 10B are views showing an example of image degradation caused by a conventional dither process; and
FIGS. 11A and 11B are views for describing methods for eliminating a jaggy by conventional techniques.

An embodiment of the present invention will now be described with reference to the drawings.

Structure will be described first.

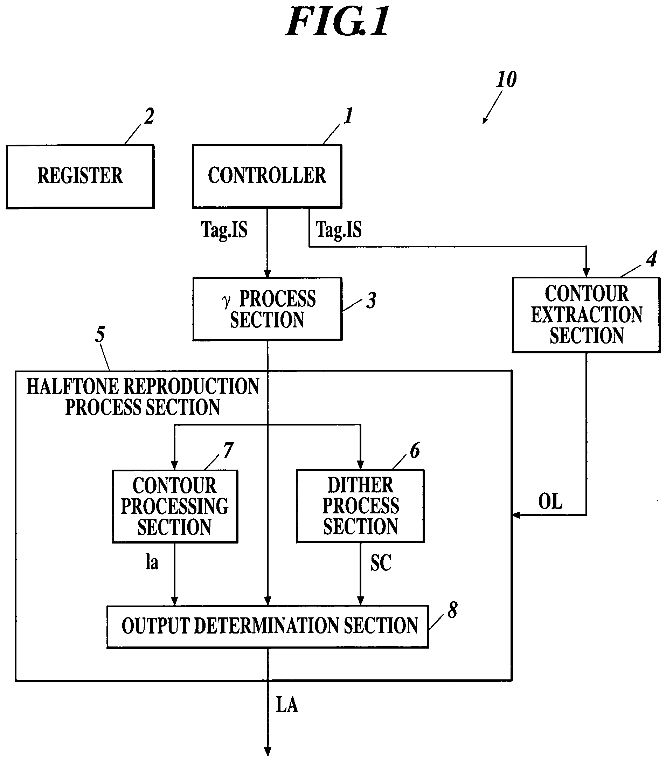

FIG. 1 is a block diagram showing the internal structure of an image processing apparatus 10 according to an embodiment of the present invention.

As shown in FIG. 1, the image processing apparatus 10 comprises a controller 1, a register 2, a $\gamma$ process section 3, a contour extraction section 4, and a halftone reproduction process section 5.

The controller 1 receives input image data Im to be processed and PDL data from the outside and generates image data IS for each pixel by performing a rasterizing process. The image data IS may be color-converted according to color materials (in this example, the four colors of yellow (Y), magenta (M), cyan (C), and black (K)) used at the time of printing out.

In addition, the controller 1 generates an image identification signal Tag on the basis of the PDL data. Tag is one of: Image which indicates that a pixel is included in a photograph drawing; Text which indicates that a pixel is included in a character; and Graphic which indicates that a pixel is included in a line drawing.

The image data IS and the image identification signal Tag generated are outputted to the $\gamma$ process section 3 and the contour extraction section 4 at timing controlled via a line buffer (not shown).

The register 2 stores data, such as parameters and look-up tables (LUTs), which is necessary for the $\gamma$ process section 3, the halftone reproduction process section 5, etc. to perform a process and provides it in response to a read request from each section.

The $\gamma$ process section 3 makes a $\gamma$ correction of the image data IS inputted by using an LUT for $\gamma$ correction.

The contour extraction section 4 detects pixels which form the contour of a character or a line drawing (hereinafter referred to as an object) from the image data IS inputted. The contour extraction section 4 generates contour information OL indicative of whether it is a pixel (hereinafter referred to as a contour pixel) which is part of the contour for each of all pixels included in the image data IS and outputs the contour information OL to the halftone reproduction process section 5. The contour information OL will be used for a contour enhancement process performed later. In the contour enhancement process, contour portions of the object the density of which is higher than that of a background are to be processed. Therefore, the contour pixels detected by the contour extraction section 4 form the contour of the object the density of which is higher than that of the background.

How to generate the contour information OL will now be described.

A target pixel is set in order of the image data IS inputted. On the basis of Tag inputted with the target pixel, whether the target pixel is included in the object is determined. If Tag is Text or Graphic and the determination that the target pixel is included in the object is made, then the difference between the pixel value of the target pixel and the pixel value of a surrounding pixel adjacent thereto is found. If the difference is greater than or equal to a threshold set in advance for detecting a contour pixel, then the determination that the target pixel is a contour pixel is made. Only contour pixels which form the contour of the object the density of which is higher than that of the background are detected, so the threshold is a positive value. If the determination that the target pixel is a contour pixel is made, then the contour information OL generated is "1". If the determination that the target pixel is not a contour pixel is made, then the contour information OL generated is "0".

The halftone reproduction process section 5 includes a dither process section 6, a contour processing section 7, and an output determination section 8. The halftone reproduction process section 5 outputs output image data LA obtained by performing a dither process and a contour enhancement process on the $\gamma$-processed image data IS.

The dither process section 6 outputs image data SC obtained by performing a multi-level dither process on the image data IS inputted from the $\gamma$ process section 3.

The multi-level dither process will now be described.

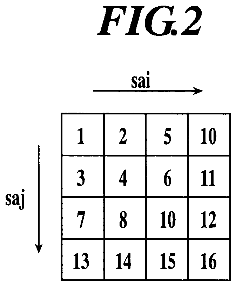

A screen cell including a plurality of elements is set in the dither process section 6. Two different thresholds TH1 and TH2 (TH1<TH2) correspond to each element (cell element) in the screen cell (one cell element corresponds to one pixel). It is assumed that the number in the main scanning direction of the cell elements is M and that the number in the sub scanning direction of the cell elements is N. In an example shown in FIG. 2, M=4 and N=4. Accordingly, the number of elements is sixteen (=4 × 4) and there are sixteen combinations of two thresholds.

The dither process section 6 receives an image signal according to pixels and finds values sai and saj indicative of the position in the screen cell in FIG. 2 of a pixel inputted by:

$$\mathtt{sai=i/M} \quad (1)$$

$$\mathtt{saj=j/N} \quad (2)$$

where i and j are coordinates indicative of the position in the entire image of the pixel inputted. The dither process section 6 specifies a numeric value at the position (sai, saj) as a cell element e corresponding to the pixel.

The dither process section 6 then finds two thresholds TH1 and TH2 corresponding to the cell element e corresponding to the pixel. The thresholds TH1 and TH2 can be obtained by referring to the value of the cell element e found from the screen cell shown in FIG. 2 in look-up tables tb1[M × N] and tb2[M × N] stored in the register 2. This can be written as:

$$TH1=tb1[\ e]\qquad(3)$$

$$TH2=tb2[\ e]\qquad(4)$$

The look-up tables tb1[M × N] and tb2[M × N] hold thresholds TH1 and TH2 for all the cell elements. The screen cell shown in FIG. 2 includes the sixteen elements, so sixteen numbers are arranged in each of the look-up tables tb1[M × N] and tb2[M × N]. This can be represented by C language codes as:

```
int tb1[ 16] =
{0,16,32,48,64,80,96,112,128,144,160,176,192,208,224,240
} ;
```

```
int tb2[ 16] =
{16,32,48,64,80,96,112,128,144,160,176,192,208,224,240,2
55} ;
```

The tables tb1 and tb2 are built so that TH1<TH2 will be satisfied.
The dither process section 6 then uses the thresholds TH1 and TH2 obtained for calculating the image data SC obtained by performing the dither process by

$$SC=\{\ (IS-TH1)\times 255/(TH2-TH1)\}\qquad(5)$$

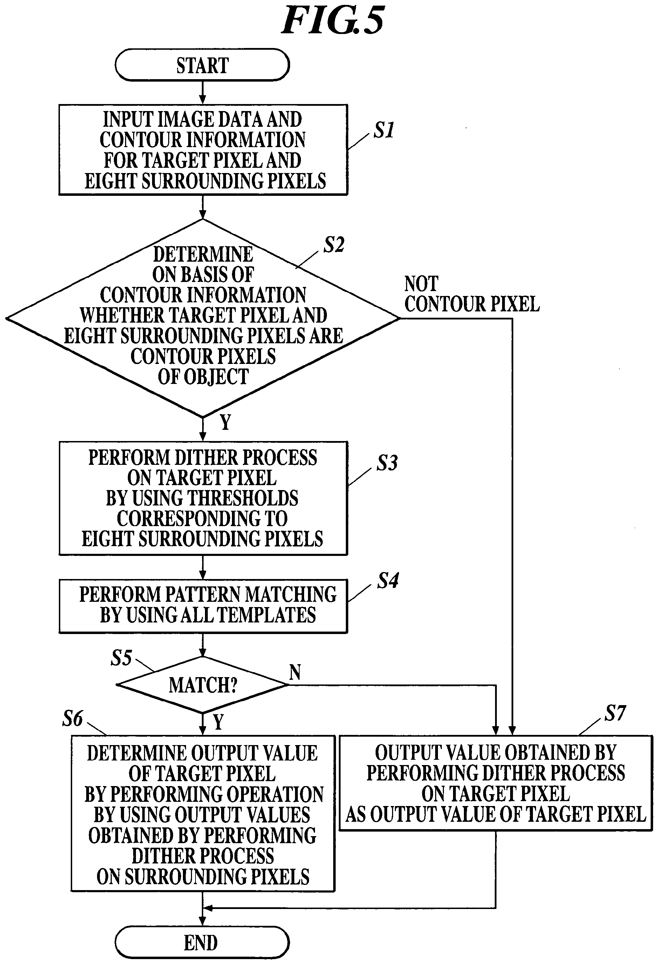

However, SC=0 when SC<0. SC=255 when SC>255.

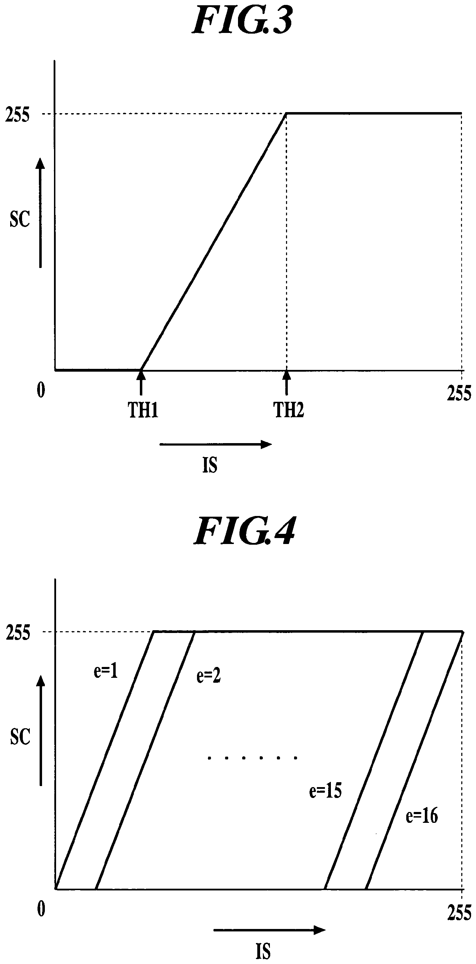

FIG. 3 is a graph showing the relationship between the input pixel value IS and the image data SC obtained by performing the dither process which is indicated by the above equation (5).
The dither process section 6 performs the above process for each pixel.
FIG. 4 is a graph showing that the relationship between the input pixel value IS and the image data SC obtained by performing the dither process differs among the different cell elements. The reason for this is that thresholds TH1 and TH2 differ among the different cell elements.
This embodiment has been described with the case where the multi-level dither process is performed as an example. However, a binary dither process may be performed.
The contour processing section 7 identifies a contour pixel of the object on the basis of the contour information OL inputted from the contour extraction section 4 and outputs image data Ia obtained by performing a dither process regarding contour enhancement on the contour pixel. In this case, the contour of the object the density of which is higher than that of the background is to be enhanced.
The output determination section 8 determines the output value of each pixel on the basis of the image data SC inputted from the dither process section 6, the image data Ia inputted from the contour processing section 7, the image data IS inputted from the $\gamma$ process section 3, and the contour information OL inputted from the contour extraction section 4 and outputs output image data LA.
The contour enhancement process performed by the halftone reproduction process section 5 will now be described with reference to a flow chart shown in FIG. 5.
In the contour enhancement process shown in FIG. 5, a target pixel is first set for the image data IS inputted. The dither process section 6 then performs the dither process on the target pixel, calculates the output value SC of the target pixel, and outputs it to the output determination section 8. In parallel with the dither process performed by the dither process section 6, the image data IS (pixel values) for the target pixel set for the image data IS inputted and eight surrounding pixels and the contour information OL for the target pixel and the eight surrounding pixels are inputted to the contour processing section 7 (step S1).

The contour processing section 7 then determines on the basis of the contour information OL whether the target pixel is a contour pixel of the object on which the contour enhancement process is to be performed (step S2). That is to say, if OL=1, then the contour processing section 7 determines that the target pixel is a contour pixel of the object. If OL=0, then the contour processing section 7 determines that the target pixel is not a contour pixel of the object. If the target pixel is not a contour pixel of the object (NOT CONTOUR PIXEL in step S2), then step S7 described later will be performed. If the contour processing section 7 determines that the target pixel is a contour pixel of the object (Y in step S2), then a dither process is performed on the target pixel by using thresholds TH1 and TH2 corresponding to the eight surrounding pixels ("n" of 1 to 8 is used for identifying the eight surrounding pixels).

The thresholds TH1 and TH2 corresponding to the eight surrounding pixels are found in the following way. The coordinates (i, j) of the target pixel in equations (1) and (2) are first replaced by the coordinates (ip, jp) of each of the eight surrounding pixels. The relationships between the coordinates of the target pixel and the eight surrounding pixels are as follows:

ip=i-1 and jp=j-1 for n=1
ip=i and jp=j-1 for n=2
ip=i+1 and jp=j-1 for n=3
ip=i-1 and jp=j for n=4
ip=i+1 and jp=j for n=5
ip=i-1 and jp=j+1 for n=6
ip=i and jp=j+1 for n=7
ip=i+1 and jp=j+1 for n=8
sai and saj obtained are then applied to the screen cell shown in FIG. 2 to find an element value e.

Finally, as shown by equations (3) and (4), the thresholds TH1 and TH2 are obtained by referring to the element value e in the look-up tables tb1 and tb2.

The thresholds TH1 and TH2 found are then substituted in equation (5) to obtain the dither output

$$la[n] =\{ (IS-TH1)\times 255/(TH2-TH1)\} \qquad (8)$$

la[n] is dither output obtained by using thresholds for a surrounding pixel specified by n. By repeating the above operations, dither outputs la[1] through la[8] for all the surrounding pixels are obtained and are outputted to the output determination section 8 (step S3).

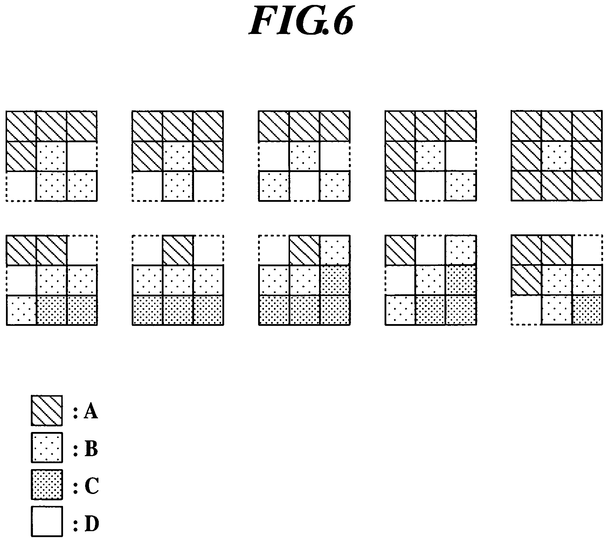

The output determination section 8 performs pattern matching on the target pixel and the eight surrounding pixels on the basis of their pixel values and the contour information OL inputted from the contour extraction section 4 by using templates shown in FIG. 6 (step S4) and determines whether the target pixel and the eight surrounding pixels match at least one template (step S5).

These templates are used for detecting a pixel (referred to as a specific pixel) which is a surrounding pixel for the target pixel, being a contour pixel, and which is outside the object. In the templates shown in FIG. 6, a pixel indicated by A is a specific pixel to be detected, a pixel indicated by B is a contour pixel of the object, a pixel indicated by C is a pixel inside a contour pixel of the object, and a pixel indicated by D is a surrounding pixel for the target pixel and is outside the object.

At the time of performing the matching, each template is placed so that the target pixel will be in the center of it. Each time a matching process is performed, each template is rotated by 90 degrees. That is to say, if all of the ten templates shown in FIG. 6 are used, a matching process is performed on one target pixel forty times.

If the conditions that (1) all surrounding pixels corresponding to a pixel indicated by B are contour pixels and that (2) the pixel value of a contour pixel is a certain value or more greater than that of a surrounding pixel corresponding to a pixel indicated by D or A are both met, then the determination that the target pixel and the eight surrounding pixels match a template is made. Condition (2) is required for performing a contour enhancement process only on an object the density of which is higher than that of a background. Whether condition (1) is met is determined on the basis of the contour information OL. Whether condition (2) is met is determined by comparing the pixel value of the target pixel with the pixel value of a surrounding pixel corresponding to a pixel indicated by D or A.

If the determination that the target pixel and the eight surrounding pixels match at least one template is made (Y in step S5), then the output determination section 8 performs a predetermined operation for a surrounding pixel [n] corresponding to a pixel in the template indicated by C, that is to say, for a surrounding pixel [n] detected as a specific pixel by using an output value la[n] calculated by the contour processing section 7 and determines an output value calculated by the operation as an output value LA of the target pixel (step S6).

In this embodiment, an output value la[n] that is the greatest of output values la[n] of specific pixels is calculated and is determined as the output value LA. By outputting the maximum value, the density of a contour portion can be increased and contour enhancement can be performed.

Another operation may be performed. For example, the sum of output values la[n] of specific pixels may be determined as the output value LA. The weighted average of output values la[n] of specific pixels may be calculated. By using these operation methods, the output density of a contour portion can be controlled.

If the target pixel and the eight surrounding pixels do not match a template (N in step S5), then an output value SC obtained by performing an ordinary dither process by using the thresholds for the target pixel is determined as an output value LA of the target pixel (step S7).

The above process is performed on all pixels included in the image data IS inputted and an output value LA determined for each pixel is outputted as final output image data LA.

An example of output obtained by the above contour enhancement process will now be described.

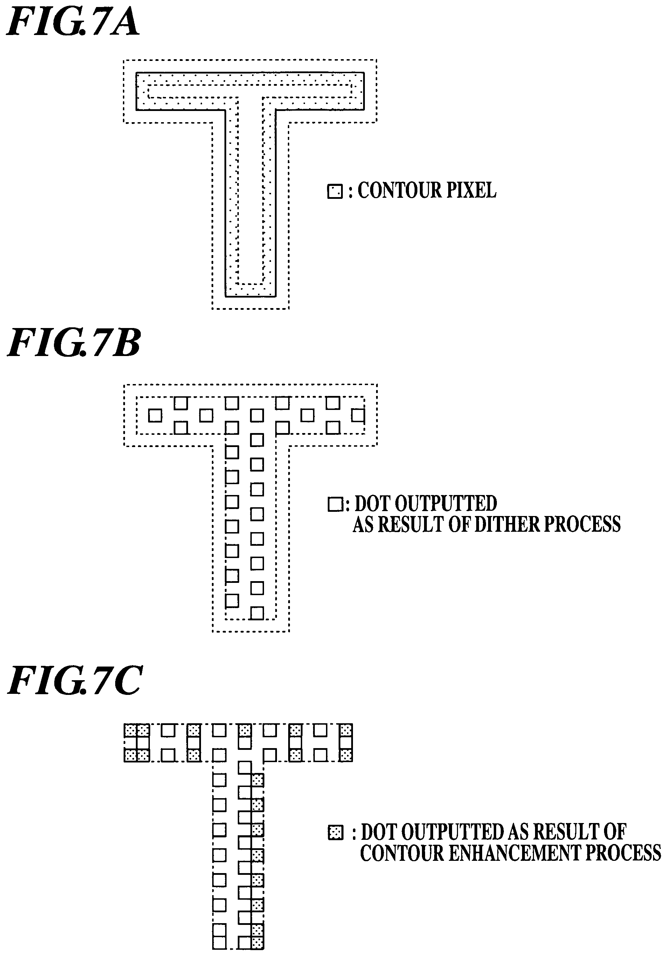

The case where an object "T" (area enclosed by a solid line) shown in FIG. 7A is outputted will be described. If the above contour enhancement process is not performed and an ordinary dither process is performed on this object, then an output result shown in FIG. 7B is obtained as image data SC. In a horizontal line of the output result "T," dots are outputted in some portions along the contour line, but dots are not outputted in others along the contour line. That is to say, a jaggy phenomenon has occurred. In a vertical line of the output result "T," thinning has occurred.

However, if the contour enhancement process according to the present invention is performed, then an output value la[n] that is the greatest of output values la[n] obtained by performing a dither process by using thresholds for specific pixels (pixels which are in an area outside the object "T" enclosed by dotted lines shown in FIG. 7B) detected is outputted for each contour pixel (see FIG. 7A). Accordingly, an output result shown in FIG. 7C is obtained. As shown in FIG. 7C, dots are outputted in contour pixel portions of the object and contour enhancement succeeds. Moreover, by performing contour enhancement, the jaggy is eliminated and the thinning is lessened.

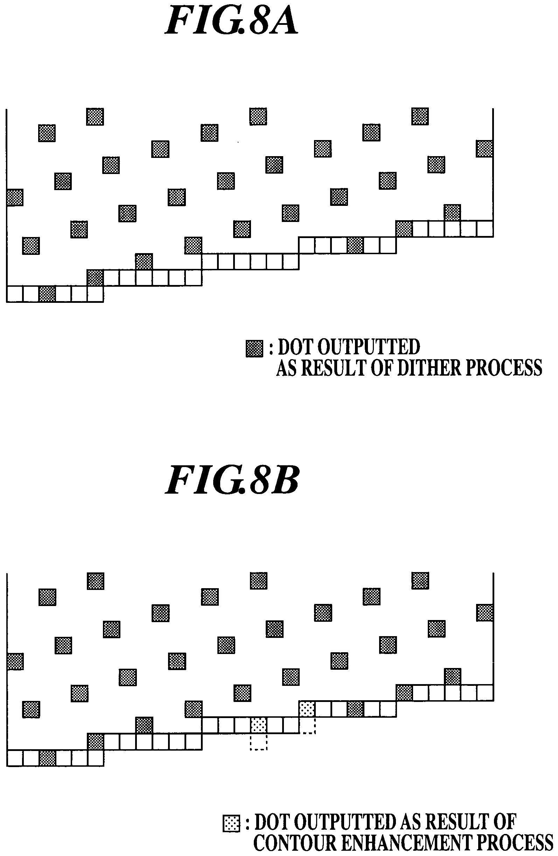

FIG. 8A shows an output result obtained by performing a dither process on a large letter in a halftone. The distance between dots outputted as a result of the dither process is long in an area where density is uniformly low. Accordingly, a jaggy appears near the contour.

As shown in FIG. 8B, however, dots are outputted in contour portions if the contour enhancement process is performed. Therefore, the appearance of a jaggy can be restrained effectively.

As has been described in the foregoing, in this embodiment of the present invention an output value which is the greatest of output values obtained by performing a dither process by using thresholds for a dither process corresponding to pixels outside an object is considered as an output value of a target pixel, being a contour pixel. As a result, a dot output rate in contour pixel portions can be raised. By performing, for example, contour enhancement, the contour of the object can be properly represented even after the dither process. This prevents degradation in image quality caused by the appearance of a jaggy, thinning, or the like and improves the apparent resolution of the object.

In addition, dots are outputted in contour pixel portions by the contour enhancement process, so periodicity caused by a uniform dither process can be broken. This prevents periodic interference and avoids degradation in image quality caused by, for example, the appearance of moire. Intervals between dots are long especially in a low-density area. However, dots outputted as a result of the contour enhancement process are not touching dots which have been outputted as a result of an ordinary dither process, so degradation in image quality caused by a local increase in density at the printing stage can be prevented. Moreover, even if the angle of the contour of the object differs from the screen angle of a dither screen, periodicity caused by the dither process can be broken. Therefore, degradation in image quality caused by periodicity can be reduced.

Furthermore, whether the target pixel is a contour pixel is determined on the basis of the pixel value of the target pixel and the pixel value of a surrounding pixel. Therefore, whether the target pixel is a contour pixel which forms part of the contour of the object can be determined with not only information regarding the target pixel but also information regarding the surrounding pixel taken into consideration.

In addition, the contour enhancement process can be performed only if it is necessary to perform a dither process on the contour.

Moreover, thresholds for a dither process corresponding to a plurality of surrounding pixels outside the object are used for determining the output value of the target pixel. As a result, the output value can be determined according to circumstances and a more natural contour can be reproduced. The extent to which the contour is enhanced can be controlled by an operation.

In the above embodiment the contour of the object is enhanced. However, if a multi-level dither method is adopted, a process for decreasing the density of pixels in a contour portion can be performed after the above process to avoid unnecessary enhancement of the contour portion.

In the process performed in the above embodiment, thresholds for a cell element corresponding to a pixel outside the object are applied to the target pixel by shifting the screen cell with respect to the target pixel according to the template patterns. However, the present invention is not limited to such a case. When a dither process is performed, the position of the target pixel may be shifted instead of shifting the screen cell. An example of a process in which the position of a target pixel is shifted is as follows.

(1) First, a process for thickening an object outward is performed and a dither process is performed on the thickened object.
(2) An output value of a pixel corresponding to a thickened portion which is obtained as a result of the dither process is then compared with an output value of a contour pixel of the original object.
(3) If the output value of the pixel corresponding to the thickened portion which is obtained as a result of the dither process is greater than the output value of the contour pixel of the original object, then this output value is used as the output value of the contour pixel of the original object and the thickened object is returned to the original size (thinned).

## Claims

1. An image processing method comprising:

   discriminating whether a target pixel of an image to be processed is a contour pixel which is part of a contour of an object, and generating a contour information (OL);
   **characterized by** comprising following steps:

   if it is determined that the target pixel is a contour pixel, performing a dither process on the target pixel by using a plurality of thresholds corresponding to a plurality of surrounding pixels, and obtaining a plurality of dither output values (la[n]);
   performing pattern matching on the target pixel and its surrounding pixels on basis of their pixel values and the contour information (OL) by using predetermined templates, to determine whether the target pixel and its surrounding pixels match at least one template;
   if match, a maximum value of the plurality of dither output values (la[n]) is determined to be an output value (LA) of the target pixel. if no match or the target pixel is not a contour pixel, an output value obtained by performing a dither process by using the thresholds for the target pixel is determined as an output value of the target pixel.

2. The method of claim 1, wherein in the discriminating, whether the target pixel is a contour pixel which constitutes a part of the contour of the object or not, is discriminated based on the pixel value of the target pixel and pixel values of the surrounding pixels for the target pixel.

3. The method of claim 1 or 2, wherein in the determining, an output value is obtained by applying a threshold for a dither process corresponding to the target pixel and is determined as the output value of the target pixel, in the case of discriminating that the target pixel is not a contour pixel.

4. The method of anyone of claims 1 to 3, further comprising inputting an image identification signal indicative of a type of the image including the target pixel, wherein the determining is performed only on a target pixel for which the image identification signal is a specific signal.

5. The method of anyone of claims 1 to 4, further comprising inputting the pixel value of the target pixel, wherein the determining is performed only when the pixel value of the target pixel is greater than or equal to a certain value.

6. A recording medium storing an image processing program for causing a computer to execute a method according to any of claims 1 to 5.

## Patentansprüche

1. Bildverarbeitungsverfahren umfassend:

Unterscheiden, ob ein Zielpixel eines zu verarbeitenden Bildes ein Konturpixel ist, das Teil einer Kontur eines Objekts ist, und Erzeugen einer Konturinformation (OL);
**gekennzeichnet durch** ein Umfassen der folgenden Schritte:

wenn ermittelt wird, dass das Zielpixel ein Konturpixel ist, Durchführen eines Ditherprozesses an dem Zielpixel durch Einsatz einer Vielzahl von Schwellwerten, die einer Vielzahl von umgebenden Pixeln entsprechen, und Erhalten einer Vielzahl von Dither-Ausgabewerten (la[n]);
Durchführen eines Musterabgleichs an dem Zielpixel und dessen umgebende Pixel auf Basis ihrer Pixelwerte und der Konturinformation (OL) durch Verwenden von vorbestimmten Vorlagen, um zu ermitteln, ob das Zielpixel und seine umgebenden Pixel mindestens zu einer Vorlage passen;
im Fall eines Zusammenpassens, wird ein maximaler Wert der Vielzahl von Dither-Ausgabewerten (la[n]) dazu bestimmt, ein Ausgabewert (LA) des Zielpixels zu sein,
im Fall eines Nicht-Zusammenpassens oder wenn der Zielpixel nicht ein Konturpixel ist, wird ein Ausgabewert, der mittels Durchführen eines Ditherprozesses durch Verwendung der Schwellwerte für die Zielpixel erhalten wird, als ein Ausgabewert des Zielpixels bestimmt.

2. Verfahren nach Anspruch 1, wobei beim Unterscheiden, ob der Zielpixel ein Konturpixel ist, der einen Teil der Kontur des Objects ausmacht oder nicht, auf Basis des Pixelwertes des Zielpixels und Pixelwerten der umgebenden Pixel für den Zielpixel unterschieden wird.

3. Verfahren nach Anspruch 1 oder 2, wobei beim Bestimmen ein Ausgabewert durch Anwenden eines Schwellwertes für einen Ditherprozess entsprechend dem Zielpixel erhalten wird und als der Ausgabewert des Zielpixels bestimmt wird, falls das Unterscheiden ergab, dass der Zielpixel nicht ein Konturpixel ist.

4. Verfahren nach einem der Ansprüche 1 bis 3, ferner umfassend Eingeben eines Bildidentifikationssignals, das einen Typ des Bildes anzeigt, das den Zielpixel enthält, wobei das Ermitteln nur an einem Zielpixel durchgeführt wird, für welches das Bildidentifikationssignal ein bestimmtes Signal ist.

5. Verfahren nach einem der Ansprüche 1 bis 4, ferner umfassend Eingeben des Pixelwertes des Zielpixels, wobei das Ermitteln nur durchgeführt wird, wenn der Pixelwert des Zielpixels größer oder gleich eines bestimmten Wertes ist.

6. Aufnahmemedium, das ein Bildverarbeitungsprogramm zum Veranlassen eines Computers zum Ausführen eines Verfahrens nach einem der Ansprüche 1 bis 5 speichert.

**Revendications**

1. Méthode de traitement d'image, comprenant
distinguer, si un pixel cible d'une image à traiter est un pixel contour qui fait partie d'un contour d'un objet, et générer une information de contour (OL);
**caractérisée en ce qu'**elle comprend les étapes suivantes :

s'il est établi que le pixel cible est un pixel contour, effectuer un processus dither sur le pixel cible en utilisant une pluralité de seuils correspondant à une pluralité de pixels périphériques et obtenir une pluralité de valeurs de sortie dither (la[n]);
effectuer un appartement de formes sur le pixel cible et ses pixels périphériques sur la base de leurs valeurs de pixels et l'information de contour (OL) en utilisant des gabarits prédéterminés afin de distinguer si le pixel cible et ses pixels périphériques correspondent à au moins un gabarit ;
en cas de correspondance, une valeur maximale de la pluralité de valeurs de sortie dither (la[n]) est établie pour être une valeur de sortie (LA) du pixel cible,
en cas d'absence de correspondance ou si le pixel cible n'est pas un pixel contour, une valeur de sortie obtenue par la réalisation d'un processus dither en utilisant les seuils pour le pixel cible est établie comme une valeur de sortie du pixel cible.

2. Méthode selon fa revendication 1, dans laquelle la distinction si ou non un pixel cible est un pixel contour qui constitue une partie du contour de l'objet est distingué sur la base de la valeur de pixel du pixel cible et des valeurs de pixels des pixels périphériques pour le pixel cible.

3. Méthode selon la revendication 1 ou 2, dans laquelle lors de l'établissement, une valeur de sortie est obtenue en appliquent un seuil pour un processus dither correspondant au pixel cible et est établi comme la valeur de sortie du pixel cible dans le cas de la distinction que le pixel cible n'est pas un pixel contour.

4. Méthode selon l'une quelconque des revendications 1 à 3, comprenant en complément la saisie d'un signal d'identification d'image indicateur d'un type de l'image comprenant le pixel cible et dans laquelle l'établissement est effectué uniquement sur un pixel cible pour lequel le signal d'identification d'image est un signal spécifique.

5. Méthode selon l'une quelconques des revendications 1 à 4, comprenant en complément la saisie de la valeur de pixel du pixel cible et dans laquelle l'établissement est réalisé uniquement lorsque la valeur de pixel du pixel cible est supérieure ou équivalente à une certaine valeur.

6. Support d'enregistrement enregistrant une programme de traitement d'image pour ordonner à un ordinateur d'exécuter une méthode selon l'une quelconque des revendications 1 à 5.

# FIG.1

*10*

*2*
```
REGISTER
```

*1*
```
CONTROLLER
```

Tag.IS                Tag.IS

*3*
```
γ PROCESS
SECTION
```

*4*
```
CONTOUR
EXTRACTION
SECTION
```

*5*

**HALFTONE REPRODUCTION
PROCESS SECTION**

*7*
```
CONTOUR
PROCESSING
SECTION
```

*6*
```
DITHER
PROCESS
SECTION
```

OL

la                SC

*8*
```
OUTPUT DETERMINATION SECTION
```

LA

## FIG.2

sai →

saj ↓

| 1 | 2 | 5 | 10 |
|----|----|----|----|
| 3 | 4 | 6 | 11 |
| 7 | 8 | 10 | 12 |
| 13 | 14 | 15 | 16 |

# *FIG.3*

# *FIG.4*

# FIG.5

```
                    ┌──────────────────┐
                    │      START       │
                    └──────────────────┘
                             │
                             ▼
            ┌────────────────────────────────┐
            │   INPUT IMAGE DATA AND         │  S1
            │   CONTOUR INFORMATION          │
            │   FOR TARGET PIXEL AND         │
            │   EIGHT SURROUNDING PIXELS     │
            └────────────────────────────────┘
                             │
                             ▼
                      DETERMINE                    S2
                    ON BASIS OF
                 CONTOUR INFORMATION                  NOT
              WHETHER TARGET PIXEL AND             CONTOUR PIXEL
            EIGHT SURROUNDING PIXELS ARE ──────────────┐
                 CONTOUR PIXELS                        │
                    OF OBJECT                          │
                        │ Y                            │
                        ▼                              │
            ┌────────────────────────────┐             │
            │  PERFORM DITHER PROCESS     │  S3         │
            │     ON TARGET PIXEL         │             │
            │   BY USING THRESHOLDS       │             │
            │   CORRESPONDING TO          │             │
            │ EIGHT SURROUNDING PIXELS    │             │
            └────────────────────────────┘             │
                        │                              │
                        ▼                              │
            ┌────────────────────────────┐  S4         │
            │  PERFORM PATTERN MATCHING   │             │
            │    BY USING ALL TEMPLATES   │             │
            └────────────────────────────┘             │
                        │                              │
           S5           ▼           N                  │
                    MATCH? ─────────────────┐          │
                        │ Y                 │          │
    S6                  ▼                   │          │   S7
   ┌────────────────────────────┐   ┌───────────────────────────┐
   │ DETERMINE OUTPUT VALUE      │   │ OUTPUT VALUE OBTAINED BY  │
   │   OF TARGET PIXEL           │   │ PERFORMING DITHER PROCESS │
   │ BY PERFORMING OPERATION     │   │    ON TARGET PIXEL        │
   │ BY USING OUTPUT VALUES      │   │ AS OUTPUT VALUE OF TARGET │
   │ OBTAINED BY PERFORMING      │   │        PIXEL              │
   │   DITHER PROCESS            │   └───────────────────────────┘
   │ ON SURROUNDING PIXELS       │              │
   └────────────────────────────┘              │
                        │                       │
                        ▼◄──────────────────────┘
                    ┌──────────┐
                    │   END    │
                    └──────────┘
```

# FIG.6

: A
: B
: C
: D

## FIG.7A

□ : CONTOUR PIXEL

## FIG.7B

□: DOT OUTPUTTED
AS RESULT OF DITHER PROCESS

## FIG.7C

⊠ : DOT OUTPUTTED AS RESULT OF
CONTOUR ENHANCEMENT PROCESS

# FIG.8A

■ : DOT OUTPUTTED
   AS RESULT OF DITHER PROCESS

# FIG.8B

▨ : DOT OUTPUTTED AS RESULT OF
   CONTOUR ENHANCEMENT PROCESS

17

# FIG.9

▦ : SCREEN DOT
☐ : PIXEL WHICH FORMS CONTOUR PORTION

## FIG.10A

## FIG.10B

■ : DOT OUTPUTTED
AS RESULT OF DITHER PROCESS

## FIG.11A

☒ : CONTOUR AREA

▦ : 90-DEGREE SINGLE LINE SCREEN

▦ : 0-DEGREE SINGLE LINE SCREEN

## FIG.11B

☒ : CONTOUR AREA

▦ : 30-DEGREE DOT SCREEN

▦ : 0-DEGREE DOT SCREEN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP TOKUKAIHEI9282471 A
- JP TOKUKAI200440499 A
- EP 0356225 A
- US 6038348 A
- US 4437122 A